# EUROPEAN PATENT SPECIFICATION

(11) **EP 4 098 916 B1**
(45) Date of publication and mention of the grant of the patent: **08.01.2025**
(21) Application number: 21215445.4
(22) Date of filing: 17.12.2021
(51) Int. Cl.: F25B 41/20, F16K 15/02, F16K 15/06

(54) **CHECK VALVE, REFRIGERANT PIPING SYSTEM HAVING SAME, AND ASSEMBLING METHOD THEREOF**
RÜCKSCHLAGVENTIL, KÄLTEMITTELROHRLEITUNGSSYSTEM DAMIT UND MONTAGEVERFAHREN DAFÜR
CLAPET DE RETENUE, SYSTÈME DE TUYAUTERIE DE RÉFRIGÉRANT DOTÉ DE CELUI-CI ET SON PROCÉDÉ D'ASSEMBLAGE

(30) Priority: 31.05.2021 KR 20210070014
(43) Date of publication of application: 07.12.2022
(73) Proprietor: HS R & A Co., Ltd., Yangsan-si, Gyeongsangnam-do 50592 (KR)
(72) Inventor: HWANG, Kwon Sik, 50609 Gyeongsangnam-do (KR); KIM, Young Jun, 50650 Gyeongsangnam-do (KR); SUNG, Seung Hoon, 48516 Busan (KR); CHOI, Jae Hyeok, 50634 Gyeongsangnam-do (KR)
(74) Representative: Tiburzi, Andrea

(56) References cited:
- EP-A2- 1 455 084
- WO-A1-2010/098661
- DE-A1- 2 726 645
- FR-A1- 3 052 216
- IT-A1- BS20 120 113
- KR-A- 20100 045 169
- US-A- 6 142 037

## Description

### BACKGROUND

### Field

The disclosure relates to a check valve, a refrigerant piping system having the check valve, and an assembling method of the refrigerant piping system. Particularly, the disclosure relates to a check valve integrally assembled with a refrigerant piping line of a refrigerant piping system to improve the assembling property of the refrigerant piping system, and also relates to the refrigerant piping system having the check valve, and an assembling method of the refrigerant piping system.

### Description of Related Art

Automotive air conditioning equipment is vehicle internal equipment installed to cool or heat the interior of a vehicle in summer or winter or to remove frost stuck on a windshield in rain or winter for the purpose of allowing the driver to secure front and rear views. The automotive air conditioning equipment, generally including both a heating system and a cooling system, selectively introduces outside or inside air, heats or cools the air, and then blows it into the interior of the vehicle, thereby cooling, heating, or ventilating the vehicle interior.

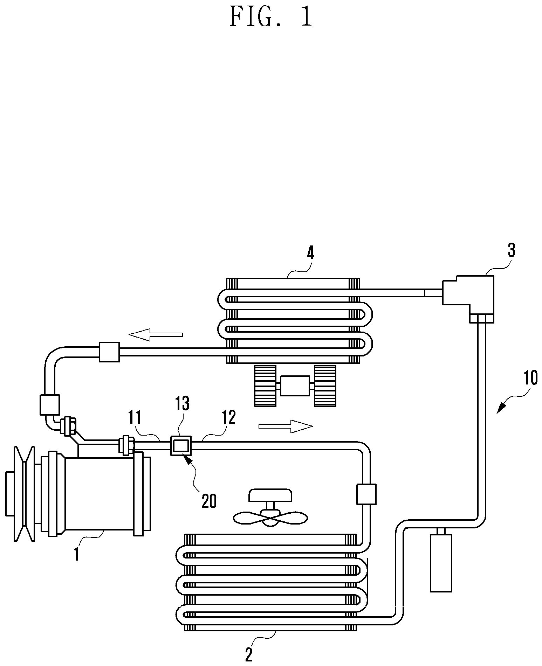

As shown in FIG 1, the cooling system of the automotive air conditioning equipment is constituted such that a compressor 1, a condenser 2, an expansion valve 3, an evaporator 4, and the like are interconnected by a refrigerant piping line of a refrigerant piping system 10 composed of a plurality of refrigerant pipes. In the cooling system, the compressor 1 compresses and sends out refrigerant, and the condenser 2 condenses the high-pressure refrigerant sent from the compressor 1. In addition, the expansion valve 3 throttles the refrigerant condensed and liquefied in the condenser 2, and the evaporator 4 evaporates the low-pressure liquid refrigerant throttled by the expansion valve 3 through heat exchange with air blown into the vehicle interior and thereby cools the air discharged into the vehicle interior by the endothermic action of the evaporation latent heat of the refrigerant.

Meanwhile, in the refrigerant piping line of the refrigerant piping system 10 connecting the compressor 1 and the condenser 2, a check valve 20 for allowing the refrigerant to flow in one direction and preventing movement in the opposite direction is installed.

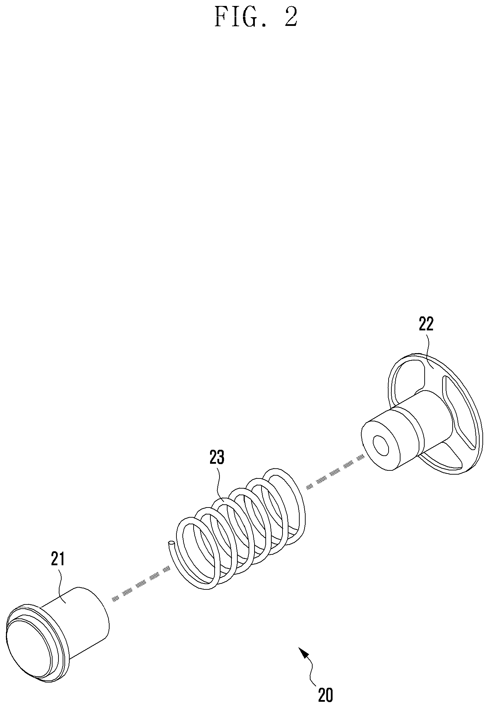

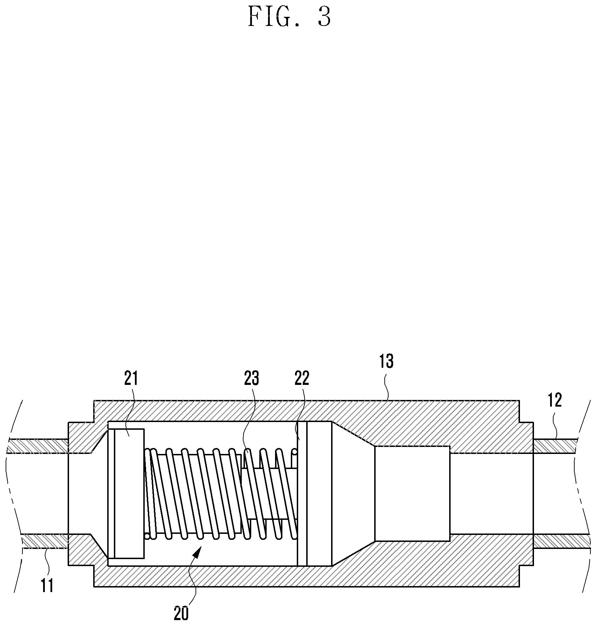

FIG. 2 is an exploded perspective view illustrating components of a conventional check valve, and FIG. 3 is a diagram illustrating the structure of a check valve included in a conventional refrigerant piping system.

With reference to FIGS. 2 and 3, the conventional check valve 20 includes a valve body 21 disposed in the refrigerant piping line, a supporter 22 coupled to one end of the valve body 21, and an elastic member 23 disposed between the valve body 21 and the supporter 22.

In addition, the refrigerant piping line is equipped with a mounting pipe 13 in which the above-described components of the check valve 20 are disposed. Also, a compressor-side refrigerant pipe 11 and a condenser-side refrigerant pipe 12 are connected to both sides of the mounting pipe 13, respectively, via welding.

However, the conventional check valve 20 is not a structure that the respective components are assembled and formed integrally, so each component of the check valve 20 should be inserted and arranged individually inside the mounting pipe 13. This results in a problem that the assembly property is deteriorated.

In addition, as the compressor-side refrigerant pipe 11 and the condenser-side refrigerant pipe 12 are connected to both sides of the mounting pipe 13, respectively, via welding, there is a problem in that the work process and manufacturing cost increase.

Documents US 6142037, FR 3052216, KR 2010/0045169, WO 2010/098661 DE 2726645, EP 1455084 and IT BS20120113 are representative of the available art.

### SUMMARY

The present application provides a refrigerant piping system in accordance with claim 1 and a method for assembling a refrigerant piping system in accordance with claim 6. Advantageous features are provided in the dependent claims.

### BRIEF DESCRIPTION OF THE DRAWINGS

FIG. 1 is a diagram schematically illustrating the structure of a cooling system connected by a conventional refrigerant piping system, not according to the invention.
FIG. 2 is an exploded perspective view illustrating components of a conventional check valve, not according to the invention.
FIG 3 is a diagram illustrating the structure of a check valve included in a conventional refrigerant piping system, not according to the invention.
FIG. 4 is a diagram schematically illustrating the structure of a cooling system connected by a refrigerant piping system according to an embodiment of the disclosure.
FIG 5 is a perspective view illustrating the structure of a check valve according to an embodiment of the disclosure.
FIG. 6 is a cross-sectional view schematically illustrating the structure of a check valve according to an embodiment of the disclosure.
FIG 7 is an exploded perspective view illustrating components of a check valve according to an embodiment of the disclosure.
FIG. 8 is a diagram schematically illustrating an operation of a stopper according to an embodiment of the disclosure.
FIG 9 is a diagram illustrating a state of check valve before operation according to an embodiment of the disclosure.
FIG. 10 is a diagram schematically illustrating an operating state of a check valve according to an embodiment of the disclosure.
FIG 11 is a flow diagram illustrating a method of assembling a refrigerant piping system according to an embodiment of the disclosure.

### DETAILED DESCRIPTION

Hereinafter, embodiments of the disclosure will be described in detail with reference to the accompanying drawings. It should be noted that, in the accompanying drawings, the same elements are denoted by the same reference numerals. In addition, detailed descriptions of well-known functions and configurations that may obscure the scope of the disclosure will be omitted.

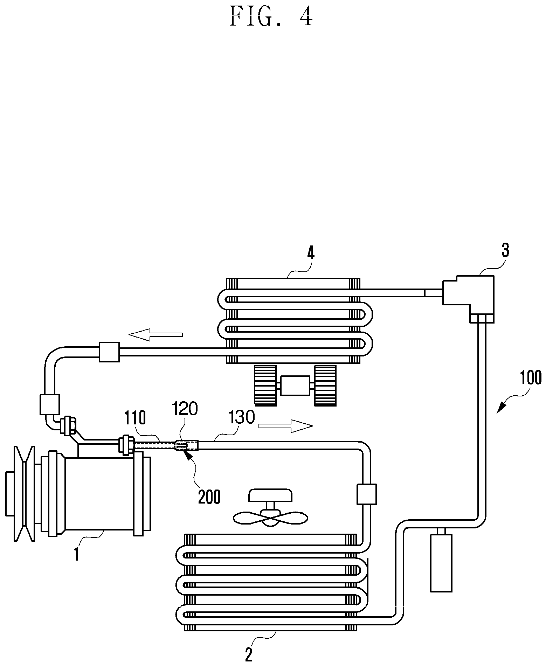

Now, an embodiment of the disclosure will be described with reference to FIGS. 4 to 11.

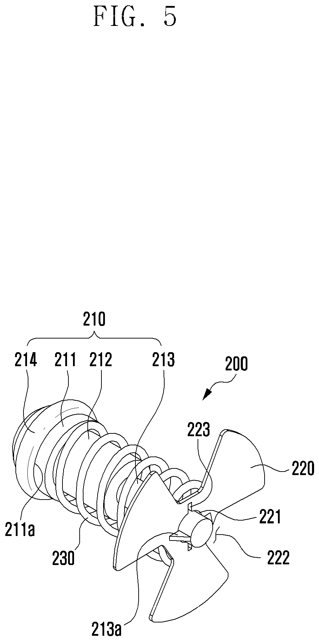

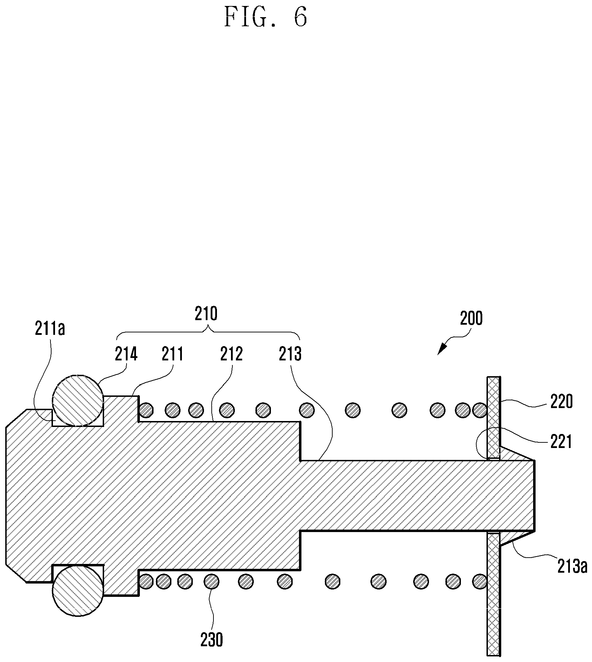

FIG. 4 is a diagram schematically illustrating the structure of a cooling system connected by a refrigerant piping system according to an embodiment of the disclosure, FIG. 5 is a perspective view illustrating the structure of a check valve according to an embodiment of the disclosure, and FIG. 6 is a cross-sectional view schematically illustrating the structure of a check valve according to an embodiment of the disclosure.

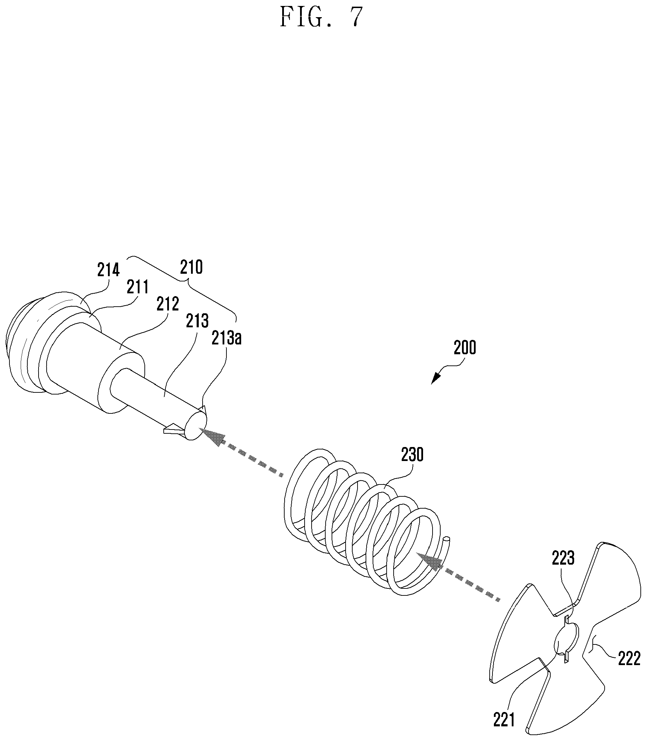

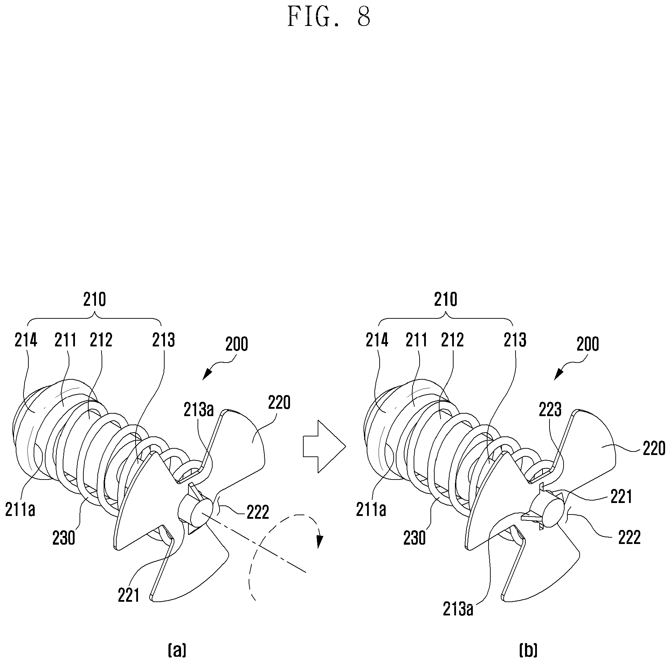

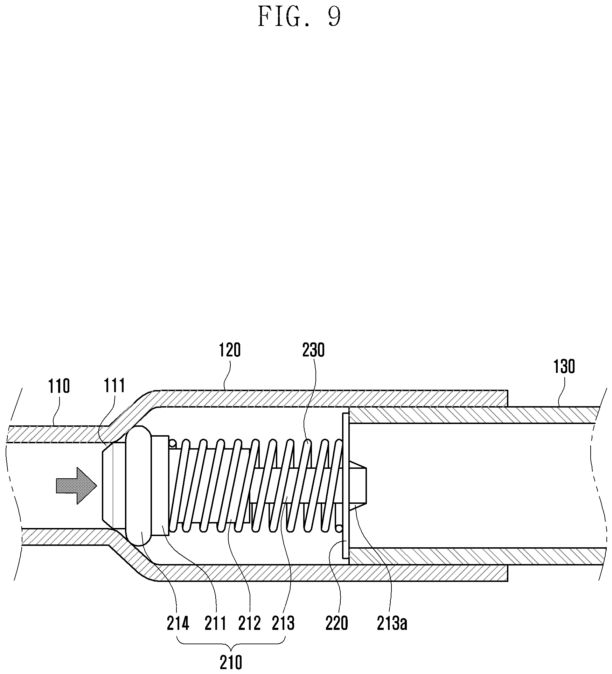

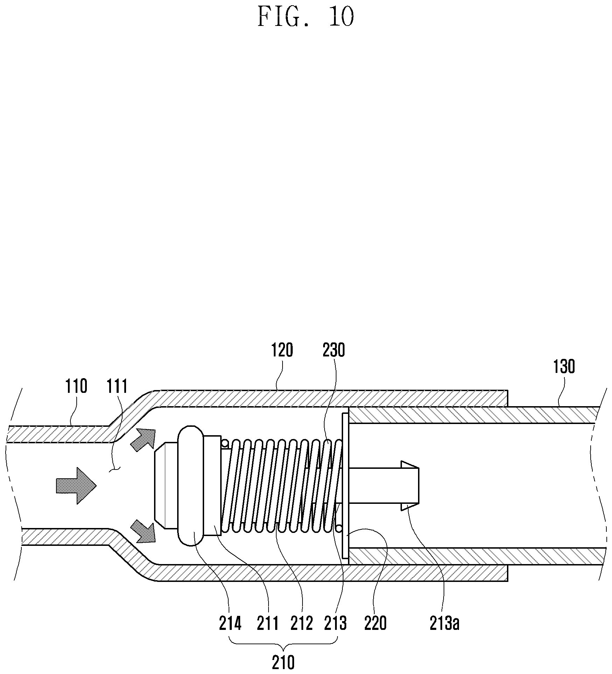

In addition, FIG. 7 is an exploded perspective view illustrating components of a check valve according to an embodiment of the disclosure, and FIG 8 is a diagram schematically illustrating an operation of a stopper according to an embodiment of the disclosure. FIG. 9 is a diagram illustrating a state of check valve before operation according to an embodiment of the disclosure, and FIG. 10 is a diagram schematically illustrating an operating state of a check valve according to an embodiment of the disclosure.

With reference to FIG. 4, the refrigerant piping system 100 according to the disclosure may include a refrigerant piping line composed of a plurality of refrigerant pipes for interconnecting the compressor 1, the condenser 2, the expansion valve 3, and the evaporator 4 constituting the vehicle cooling system.

The refrigerant piping line may include an expanded pipe 120 formed by expanding at least one of the plurality of refrigerant pipes. A check valve 200 to be described later may be provided inside the expanded pipe 120.

For example, the expanded pipe 120 provided with the check valve 200 may be formed to be expanded while extending from one side of a first refrigerant pipe 110 connected to the compressor 1. In addition, one side of a second refrigerant pipe 130 connected to the condenser 2 may be fixedly inserted into one side of the expanded pipe 120 to be connected to the first refrigerant pipe 110.

The check valve 200 provided in the expanded pipe 120 may restrict a flow direction of refrigerant flowing through the first refrigerant pipe 110 to only one direction (e.g., a direction toward the condenser).

Hereinafter, the configuration and operation of the check valve 200 according to an embodiment of the disclosure will be described in detail with reference to FIGS. 5 to 10.

As shown in FIGS. 5 to 8, the check valve 200 according to an embodiment of the disclosure includes a valve body 210, a stopper 220, and an elastic member 230.

The valve body 210 may be movably disposed inside the above-described expanded pipe 120. The valve body 210 may include a body part 211, a support part 212 for supporting the elastic member 230, and an extension part 213.

The body part 211 may restrict the flow direction of refrigerant flowing in the refrigerant pipe that connects the compressor 1 and the condenser 2. For example, the body part 211 is disposed at a connection portion between the first refrigerant pipe 110 and the expanded pipe 120 so that the front end of the body part 211 is in close contact with a discharge port 111 of the first refrigerant pipe 110 to restrict the flow direction of refrigerant to only one direction. That is, the flow direction of refrigerant may be restricted to allow the refrigerant to flow from the first refrigerant pipe 110 to the expanded pipe 120 and prevent the refrigerant from flowing backward from the expanded pipe 120 toward the first refrigerant pipe 110.

The elastic member support part 212 may be formed to extend from one end of the body part 211 toward the flow direction of refrigerant, and may have a smaller diameter than the diameter of the body part 211. A part of the elastic member 230 may be disposed to be fitted to the elastic member support part 212, and the valve body 210 can move forward and backward inside the expanded pipe 120 by the elastic restoring force of the elastic member 230.

The extension part 213 may be formed to extend from one end of the elastic member support part 212 toward the flow direction of refrigerant. The extension part 213 may have a smaller diameter than the diameter of the elastic member support part 212. The extension part 213 is movably coupled to the stopper 220 to be described later and guides the movement of the valve body 210 inside the expanded pipe 120.

At one end of the extension part 213, at least one locking protrusion 213a may be provided. The at least one locking protrusion 213a may be coupled to a locking slit 223 formed in a central portion of the stopper 220 to lock the stopper 220.

For example, the locking protrusion 213a may be formed to protrude outwardly from the outer circumferential surface of the extension part 213. Although it is shown in this embodiment that two locking protrusions 213a are formed on the outer circumferential surface of the extension part 213, this is exemplary only and is not construed as a limitation of the disclosure. The operation of the locking protrusion 213a will be described later in detail while explaining the structure of the stopper 220.

The valve body 210 according to an embodiment of the disclosure may further include a sealing member 214 on the body part 211. The sealing member 214 can prevent refrigerant from leaking when the body part 211 is in close contact with the discharge port 111 of the first refrigerant pipe 110.

In addition, the sealing member 214 can minimize any impact or noise that may be caused when the body part 211 in movement strongly contacts the discharge port 111.

The material of the sealing member 214 may be, for example, but is not limited to, ethylene propylene diene monomer (EPDM).

In addition, the body part 211 may have a sealing member coupling groove 211a concavely formed on the outer circumferential surface thereof to accommodate the sealing member 214.

As shown in FIGS. 7 to 9, the stopper 220 according to an embodiment of the disclosure may be disposed inside the expanded pipe 120 and spaced apart from the valve body 210 at a predetermined distance. Also, the stopper 220 may be disposed to be coupled to the extension part 213 of the valve body 210.

Specifically, the stopper 220 may be formed in the shape of fan blades, and at least one refrigerant passage hole 222 may be provided between the blades so that the refrigerant flowing through the expanded pipe 120 may pass. Although it is shown in this embodiment that three refrigerant passage holes 222 are formed, this is exemplary only and is not construed as a limitation of the disclosure.

In the central portion of the stopper 220, a coupling hole 221 into which one end of the extension part 213 is inserted may be provided. Also, a locking slit 223 may be formed in the central portion of the stopper 220 to extend from one side of the coupling hole 221. The locking slit 223 may receive the locking protrusion 213a formed on the extension part 213.

That is, as shown in (a) of FIG. 8, after the locking protrusion 213a formed on the extension part 213 passes through the locking slit 223 formed in the stopper 220, the stopper 220 may be rotated in any one direction. Then, as shown in (b) of FIG. 8, the locking protrusion 213a is escaped from the locking slit 223 and becomes placed on the rear surface of the stopper 220. As such, when the locking protrusion 213a and the locking slit 223 are at different positions, the stopper 220 can be fixed to the extension part 213. As a result, all of the valve body 210, the elastic member 230, and the stopper 220 are assembled into an integral form.

The elastic member 230 according to an embodiment of the disclosure is disposed between the valve body 210 and the stopper 220. One end of the elastic member 230 may be coupled to the elastic member support part 212 of the valve body 210, and the other end may be in contact with the front surface of the stopper 220. The elastic member 230 provides an elastic force to the valve body 210.

Specifically, when the pressure of the refrigerant is applied, the valve body 210 compresses the elastic member 230 while moving in the expanded pipe 120 and opens the discharge port 111 of the first refrigerant pipe 110. When the pressure of the refrigerant is removed, the valve body 210 returns to the initial position by the elastic restoring force of the elastic member 230, and the main body 211 of the valve body 210 closes the discharge port 111 of the first refrigerant pipe 110.

With reference to FIGS. 9 and 10, when the cooling system according to an embodiment of the disclosure is in an operating state, the refrigerant begins to flow by the pressure of the compressor 1.

As shown in FIG 9, the refrigerant discharged from the compressor 1 flows through the first refrigerant pipe 110 and pushes the valve body 210 of the check valve 200 that closes the discharge port 111 of the first refrigerant pipe 110. Then, as shown in FIG 10, the valve body 210 moves in the refrigerant flow direction inside the expanded pipe 120 by the pressure of the refrigerant, and therefore the discharge port 111 of the first refrigerant pipe 110 becomes open. The refrigerant flows into the expanded pipe 120 through the discharge port 111, passes through the refrigerant passage hole 222 formed in the stopper 220, and moves to the second refrigerant pipe 130 to be supplied to the condenser 2.

On the other hand, when the operation of the cooling system is stopped, the operation of the compressor 1 is also stopped and the refrigerant is no longer moved. In this case, as shown in FIG. 9, the valve body 210 returns to the initial position by the elastic restoring force of the elastic member 230 and thereby closes the discharge port 111.

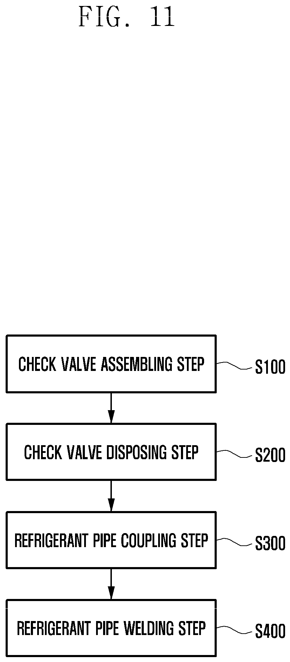

Now, an assembling method of the refrigerant piping system provided with the above-described check valve 200 according to an embodiment of the disclosure will be described in detail with reference to FIG. 11.

FIG. 11 is a flow diagram illustrating a method of assembling a refrigerant piping system according to an embodiment of the disclosure.

As shown in FIG 11, the assembling method of the refrigerant piping system 100 according to an embodiment of the disclosure may include a check valve assembling step S100, a check valve disposing step S200, a refrigerant pipe coupling step S300, and a refrigerant pipe welding step S400.

At the check valve assembling step S100, respective components of the check valve 200 are assembled.

Specifically, at the check valve assembling step S100, the elastic member 230 is coupled to the elastic member support part 212 of the valve body 210, and then the stopper 220 is coupled to the extension part 213 of the valve body 210.

At this time, one end of the extension part 213 is inserted into the coupling hole 221 of the stopper 220, and simultaneously the locking protrusion 213a formed on the extension part 213 passes through the locking slit 223 formed in the stopper 220.

In this state, when the stopper 220 is rotated in any one direction, the locking protrusion 213a is escaped from the locking slit 223 and comes into contact with the rear surface of the stopper 220. At this time, because the elastic member 230 provides an elastic force to the stopper 220, the stopper 220 is fixed to the extension part 213. In addition, the sealing member 214 is coupled to the sealing member coupling groove 211a formed in the body part 211 of the valve body 210. When this process is completed, the check valve 200 is in an integrally assembled state.

Next, at the check valve disposing step S200, the integrally assembled check valve 200 is disposed inside the expanded pipe 120.

At this time, the front end of the body part 211 of the valve body 210 is disposed in close contact with the discharge port 111 of the first refrigerant pipe 110, and the remaining configuration of the check valve 200 is located inside the expanded pipe 120.

Next, at the refrigerant pipe coupling step S300, one side of the second refrigerant pipe 130 is inserted into and coupled to one side of the expanded pipe 120.

At this time, the second refrigerant pipe 130 inserted into the expanded pipe 120 comes into close contact with the rear surface of the stopper 220. That is, as one side of the second refrigerant pipe 130 is inserted into the expanded pipe 120 and supports the rear surface of the stopper 220, it is possible to restrict the movement of the stopper 220 inside the expanded pipe 120 without any separate configuration for limiting the movement of the stopper 220.

Next, at the refrigerant pipe welding step S400, a welding process for fixing the second refrigerant pipe 130 inserted into the expanded pipe 120 to the expanded pipe 120 is performed.

Through the assembling process as described above, it is possible to simply assemble the check valve in the expanded pipe of the refrigerant piping system.

According to the disclosure, by installing the integrally assembled check valve in the refrigerant piping line of the refrigerant piping system, it is possible to improve the assembly property of the refrigerant piping system.

In addition, according to the disclosure, only the second refrigerant pipe is connected to the expanded pipe, so that the working process and manufacturing cost can be reduced as much as possible.

In addition, according to the disclosure, there is no need for a separate configuration for fixing the stopper of the check valve inside the expanded pipe, so that the structure of the refrigerant piping system can be simplified.

In addition, according to the disclosure, the sealing member is provided on the check valve, so it is possible to prevent refrigerant leakage and reduce noise as much as possible.

While the disclosure has been particularly shown and described with reference to exemplary embodiments thereof, it will be understood by those skilled in the art that various changes in form and details may be made therein without departing from the scope of the subject matter as defined by the appended claims.

## Claims

1. A refrigerant piping system(100) comprising:
a refrigerant piping line including a plurality of refrigerant pipes(110, 120, 130) for interconnecting a compressor, a condenser, an expansion valve, and an evaporator constituting a cooling system; and
a check valve(200) provided in the refrigerant piping line to limit a movement direction of refrigerant,
wherein the plurality of refrigerant pipes(110, 120, 130) includes:
a first refrigerant pipe(110) suitable for being connected to the compressor;
an expanded pipe(120) formed by expanding an inner diameter of the first refrigerant pipe in one end and formed to extend from the end of the first refrigerant pipe; and
a second refrigerant pipe(130) having one side suitable for being connected to the condenser and
another side inserted into and fixed by welding to an end of the expanded pipe(120),
wherein the check valve(200) is disposed inside the expanded pipe(120) and restricts a flow direction of refrigerant,
wherein the check valve(200) includes:
a valve body(210) movably disposed inside the expanded pipe(120) in a longitudinal direction of the refrigerant piping line and having a front end facing the first refrigerant pipe(110) and a rear end facing the second refrigerant pipe(130);
a stopper(220) coupled to the rear end of the valve body(210) to limit a movement of the valve body(210); and
an elastic member(230) disposed between the valve body(210) and the stopper(220) and providing an elastic force to the valve body(210), and
wherein the valve body(210) has at least one locking protrusion(213a) formed at the rear end thereof, and the stopper(220) has a corresponding locking slit(223), and wherein the locking protrusion(213a) is configured to pass through the locking slit(223) and is configured to rotate relatively to the valve body(210) to fix the stopper(220) to the valve body(210), and
wherein the other side of the second refrigerant pipe(130) is inserted into the one side of the expanded pipe(120) and fixed to a rear surface of the stopper(220) so as to limit a movement of the stopper(220) in the expanded pipe(120).

2. The refrigerant piping system(100) of claim 1, wherein the valve body(210) includes:
a body part(221) restricting the flow direction of the refrigerant flowing in the expanded pipe(120);
an elastic member support part(212) formed to extend from one end of the body part(221) and supporting the elastic member(230); and
an extension part(213) formed to extend from the elastic member support part(212) and having one end movably coupled to the stopper(220), and
wherein the locking projection is formed to protrude outwardly from an outer circumferential surface of the one end of the extension part(213).

3. The refrigerant piping system(100) of claim 2, wherein the elastic member support part(212) has a diameter smaller than a diameter of the body part(221), and the extension part(213) has a diameter smaller than the diameter of the elastic member support part(212).

4. The refrigerant piping system(100) of claim 2, wherein the stopper(220) is formed in a shape of fan blades, has at least one refrigerant passage hole formed between the blades to allow the refrigerant to pass, has a coupling hole formed in a central portion into which one end of the extension part(213) is movably inserted, and has the locking slit(223) formed to extend from the coupling hole.

5. The refrigerant piping system(100) of claim 2, wherein the valve body(210) further includes:
a sealing member coupled on the body part(221) and preventing the refrigerant existing in the first refrigerant pipe from leaking when the first refrigerant pipe is closed by the operation of the valve body(210), and
wherein the body part(221) has a sealing member coupling groove concavely formed on an outer circumferential surface thereof to accommodate the sealing member.

6. A method for assembling a refrigerant piping system(100) including a first refrigerant pipe(110) connected to a compressor, an expanded pipe(120) formed by expanding an inner diameter of the first refrigerant pipe in one end and formed to extend from the end of the first refrigerant pipe, and a second refrigerant pipe(130) having one side connected to a condenser and other side inserted into and fixed to one side of the expanded pipe(120), the method comprising:
assembling(S100) a check valve(200) including a valve body(210), a stopper(220) coupled to a rear end of the valve body(210), and an elastic member(230) disposed between the valve body(210) and the stopper(220);
disposing(S200) the check valve(200) inside the expanded pipe(120);
inserting and coupling(S300) one side of the second refrigerant pipe(120) into and to one side of the expanded pipe(120) in which the check valve(200) is disposed; and
fixing(S400) the one side of the second refrigerant pipe(130) and the one side of the expanded pipe(120) by welding.

7. The method of claim 6, wherein assembling(S100) the check valve(200) includes:
coupling the elastic member(230) to the valve body(210);
inserting one end of the valve body(210) having at least one locking protrusion(213a) into the stopper(220) having a coupling hole and a locking slit(223); and
rotating the stopper(220) in one direction such that the locking protrusion(213a) is escaped from the locking slit(223) and comes into contact with a rear surface of the stopper(220), whereby the valve body(210), the elastic member(230), and the stopper(220) are completely assembled in an integral form.

## Patentansprüche

1. Kältemittel-Rohrleitungssystem(100), umfassend: eine Kältemittelleitung mit einer Vielzahl von Kältemittelrohren(110, 120, 130) zum Verbinden eines Kompressors, eines Kondensators, eines Expansionsventils und eines Verdampfers, die ein Kühlsystem bilden; und ein Rückschlagventil(200), das in der Kältemittelleitung vorgesehen ist, um eine Bewegungsrichtung des Kältemittels zu begrenzen, wobei die mehreren Kältemittelleitungen(110, 120, 130) umfassen: eine erste Kältemittelleitung(110), die zum Anschluss an den Kompressor geeignet ist; ein aufgeweitetes Rohr(120), das durch Aufweiten eines Innendurchmessers des ersten Kältemittelrohrs an einem Ende gebildet wird und so geformt ist, dass es sich von dem Ende des ersten Kältemittelrohrs aus erstreckt; und ein zweites Kältemittelrohr(130), das eine Seite hat, die geeignet ist, mit dem Kondensator verbunden zu werden, und eine andere Seite, die in ein Ende des erweiterten Rohrs(120) eingesetzt und durch Schweißen daran befestigt ist, wobei das Rückschlagventil(200) innerhalb des erweiterten Rohrs(120) angeordnet ist und eine Strömungsrichtung des Kältemittels einschränkt, wobei das Rückschlagventil(200) umfasst: einen Ventilkörper(210), der beweglich innerhalb des erweiterten Rohrs(120) in einer Längsrichtung der Kältemittelleitung angeordnet ist und ein vorderes Ende aufweist, das dem ersten Kältemittelrohr(110) zugewandt ist, und ein hinteres Ende, das dem zweiten Kältemittelrohr(130) zugewandt ist; einen stopper(220), der mit dem hinteren Ende des Ventilkörpers(210) verbunden ist, um eine Bewegung des Ventilkörpers(210) zu begrenzen; und ein elastisches Element(230), das zwischen dem Ventilkörper(210) und dem Stopper(220) angeordnet ist und eine elastische Kraft auf den Ventilkörper(210) ausübt, und wobei der Ventilkörper(210) mindestens einen Verriegelungsvorsprung(213a) aufweist, der an seinem hinteren Ende ausgebildet ist, und der Stopfen(220) einen entsprechenden Verriegelungsschlitz(223) aufweist, und wobei der Verriegelungsvorsprung(213a) so konfiguriert ist, dass er durch den Verriegelungsschlitz(223) hindurchgeht und so konfiguriert ist, dass er sich relativ zu dem Ventilkörper(210) dreht, um den Stopfen(220) an dem Ventilkörper(210) zu befestigen, und wobei die andere Seite des zweiten Kältemittelrohrs(130) in die eine Seite des erweiterten Rohrs(120) eingeführt und an einer hinteren Fläche des Stopfens (220) befestigt ist, um eine Bewegung des Stopfens(220) in dem erweiterten Rohr(120) zu begrenzen.

2. Kältemittel-Rohrleitungssystem(100) nach Anspruch 1, wobei der Ventilkörper(210) Folgendes umfasst: ein Körperteil(221), der die Strömungsrichtung des in der erweiterten Rohrleitung(120) strömenden Kältemittels begrenzt; ein Stützteil(212) für ein elastisches Element, das so ausgebildet ist, dass es sich von einem Ende des Körperteils(221) erstreckt und das elastische Element(230) stützt; und ein Verlängerungsteil(213), das so ausgebildet ist, dass es sich von dem Stützteil(212) für das elastische Element erstreckt und dessen eines Ende beweglich mit dem Stopfen(220) gekoppelt ist, und wobei der Verriegelungsvorsprung so ausgebildet ist, dass er von einer äußeren Umfangsfläche des einen Endes des Verlängerungsteils(213) nach außen vorsteht.

3. Kältemittel-Rohrleitungssystem(100) nach Anspruch 2, wobei das Stützteil(212) für das elastische Element einen Durchmesser hat, der kleiner ist als ein Durchmesser des Körperteils(221), und das Verlängerungsteil(213) einen Durchmesser hat, der kleiner ist als der Durchmesser des Stützteils (212) für das elastische Element.

4. Kältemittel-Rohrleitungssystem(100) nach Anspruch 2, wobei der Stopfen(220) in Form von Ventilatorflügeln ausgebildet ist, mindestens ein Kältemitteldurchgangsloch aufweist, das zwischen den Flügeln ausgebildet ist, um den Durchgang des Kältemittels zu ermöglichen, ein Kopplungsloch aufweist, das in einem zentralen Abschnitt ausgebildet ist, in den ein Ende des Verlängerungsteils(213) beweglich eingesetzt ist, und den Verriegelungsschlitz(223) aufweist, der so ausgebildet ist, dass er sich von dem Kopplungsloch aus erstreckt.

5. Kältemittel-Rohrleitungssystem(100) nach Anspruch 2, wobei der Ventilkörper(210) ferner umfasst: ein Dichtungselement, das mit dem Körperteil(221) verbunden ist und verhindert, dass das in der ersten Kältemittelleitung vorhandene Kältemittel ausläuft, wenn die erste Kältemittelleitung durch die Betätigung des Ventilkörpers(210) geschlossen wird, und wobei das Körperteil(221) eine Dichtungselement-Kopplungsnut aufweist, die konkav an einer äußeren Umfangsfläche davon ausgebildet ist, um das Dichtungselement aufzunehmen.

6. Verfahren zum Zusammenbau eines Kältemittelrohrsystems(100), das ein erstes Kältemittelrohr(110), das mit einem Kompressor verbunden ist, ein aufgeweitetes Rohr(120), das durch Aufweiten eines Innendurchmessers des ersten Kältemittelrohrs an einem Ende gebildet wird und so geformt ist, dass es sich von dem Ende des ersten Kältemittelrohrs aus erstreckt, und ein zweites Kältemittelrohr(130) enthält, dessen eine Seite mit einem Kondensator verbunden ist und dessen andere Seite in eine Seite des aufgeweiteten Rohrs(120) eingesetzt und daran befestigt ist, wobei das Verfahren umfasst: Zusammenbau (S100) eines Rückschlagventils(200) mit einem Ventilkörper(210), einem mit einem hinteren Ende des Ventilkörpers(210) gekoppelten Stopfen(220) und einem zwischen dem Ventilkörper(210) und dem Stopfen(220) angeordneten elastischen Element(230); Anordnen(S200) des Rückschlagventils(200) innerhalb des erweiterten Rohres(120); Einsetzen und Verbinden(S300) einer Seite des zweiten Kältemittelrohrs(120) in und mit einer Seite des erweiterten Rohrs(120), in dem das Rückschlagventil(200) angeordnet ist; und Befestigen(S400) der einen Seite des zweiten Kältemittelrohrs(130) und der einen Seite des erweiterten Rohrs(120) durch Schweißen.

7. Verfahren nach Anspruch 6, wobei das Zusammenbauen (S100) des Rückschlagventils (200) Folgendes umfasst: Koppeln des elastischen Elements (230) mit dem Ventilkörper(210); Einsetzen eines Endes des Ventilkörpers (210) mit mindestens einem Verriegelungsvorsprung(213a) in den Stopfen(220) mit einem Verbindungsloch und einem Verriegelungsschlitz(223); und Drehen des Stopfens(220) in eine Richtung, so dass der Verriegelungsvorsprung(213a) aus dem Verriegelungsschlitz(223) austritt und in Kontakt mit einer hinteren Fläche des Stopfens(220) kommt, wodurch der Ventilkörper(210), das elastische Element(230) und der Stopfen(220) vollständig in einer integralen Form zusammengebaut werden.

## Revendications

1. Système de tuyauterie de réfrigérant(100) comprenant: une ligne de tuyauterie de réfrigérant comprenant une pluralité de tuyaux de réfrigérant(110, 120, 130) pour interconnecter un compresseur, un condenseur, un détendeur, et un évaporateur constituant un système de refroidissement; et un clapet antiretour(200) placé dans la ligne de tuyauterie du réfrigérant pour limiter la direction du mouvement du réfrigérant, dans lequel la pluralité de tuyaux de réfrigérant (110, 120, 130) comprend: une première conduite de réfrigérant(110) apte à être connectée au compresseur; un tuyau expansé(120) formé par l'expansion d'un diamètre intérieur du premier tuyau de réfrigérant à une extrémité et formé pour s'étendre à partir de l'extrémité du premier tuyau de réfrigérant; et un second tuyau de réfrigérant(130) dont un côté peut être raccordé au condenseur et dont l'autre côté est inséré et fixé par soudage à une extrémité du tuyau expansé(120), le clapet antiretour(200) est disposé à l'intérieur du tuyau expansé(120) et limite la direction d'écoulement du réfrigérant, dans lequel le clapet antiretour(200) comprend: un corps de vanne(210) disposé de manière mobile à l'intérieur du tuyau expansé(120) dans une direction longitudinale de la ligne de tuyauterie de réfrigérant et ayant une extrémité avant orientée vers le premier tuyau de réfrigérant(110) et une extrémité arrière orientée vers le second tuyau de réfrigérant (130) ; un bouchon(220) couplé à l'extrémité arrière du corps de vanne(210) pour limiter le mouvement du corps de vanne(210); et un élément élastique(230) disposé entre le corps de vanne(210) et le bouchon(220) et fournissant une force élastique au corps de vanne(210), et dans lequel le corps de valve(210) a au moins une protubérance de verrouillage(213a) formée à son extrémité arrière, et le bouchon(220) a une fente de verrouillage correspondante (223), et dans lequel la protubérance de verrouillage(213a) est configurée pour passer à travers la fente de verrouillage(223) et est configurée pour tourner par rapport au corps de valve(210) pour fixer le bouchon(220) au corps de valve (210), et dans lequel l'autre côté du second tuyau de réfrigérant(130) est inséré dans l'un des côtés du tuyau expansé(120) et fixé à une surface arrière du bouchon(220) de manière à limiter le mouvement du bouchon(220) dans le tuyau expansé(120).

2. Système de tuyauterie de réfrigérant(100) de la revendication 1, dans lequel le corps de vanne(210) comprend: une partie du corps(221) limitant la direction d'écoulement du réfrigérant circulant dans le tuyau expansé(120); une partie de support de l'élément élastique(212) formée pour s'étendre à partir d'une extrémité de la partie du corps(221) et supportant l'élément élastique(230); et une partie d'extension(213) formée pour s'étendre à partir de la partie de support de l'élément élastique(212) et ayant une extrémité couplée de manière mobile au bouchon(220), et dans lequel la saillie de verrouillage est formée pour faire saillie vers l'extérieur à partir d'une surface circonférentielle extérieure de l'une des extrémités de la partie d'extension(213).

3. Système de tuyauterie de réfrigérant(100) de la revendication 2, dans lequel la partie de support de l'élément élastique(212) a un diamètre inférieur au diamètre de la partie du corps(221), et la partie d'extension(213) a un diamètre inférieur au diamètre de la partie de support de l'élément élastique(212).

4. Système de tuyauterie de réfrigérant(100) de la revendication 2, dans lequel le bouchon(220) est formé en forme de pales de ventilateur, a au moins un trou de passage de réfrigérant formé entre les pales pour permettre au réfrigérant de passer, a un trou de couplage formé dans une partie centrale dans laquelle une extrémité de la partie d'extension(213) est insérée de manière mobile, et a la fente de verrouillage (223) formée pour s'étendre à partir du trou de couplage.

5. Système de tuyauterie de réfrigérant(100) de la revendication 2, dans lequel le corps de vanne(210) comprend en outre: un élément d'étanchéité couplé à la partie du corps(221) et empêchant le réfrigérant existant dans le premier tuyau de réfrigérant de fuir lorsque le premier tuyau de réfrigérant est fermé par l'opération du corps de la vanne(210), et dans laquelle la partie du corps(221) présente une rainure de couplage de l'élément d'étanchéité concavement formée sur sa surface circonférentielle extérieure pour accueillir l'élément d'étanchéité.

6. Procédé d'assemblage d'un système de tuyauterie de réfrigérant(100) comprenant un premier tuyau de réfrigérant(110) relié à un compresseur, un tuyau expansé(120) formé par l'expansion d'un diamètre intérieur du premier tuyau de réfrigérant à une extrémité et formé pour s'étendre à partir de l'extrémité du premier tuyau de réfrigérant, et un deuxième tuyau de réfrigérant(130) ayant un côté relié à un condenseur et l'autre côté inséré dans et fixé à un côté du tuyau expansé(120), la méthode comprenant: l'assemblage(S100) d'un clapet antiretour(200) comprenant un corps de clapet(210), un bouchon(220) couplé à une extrémité arrière du corps de clapet(210), et un élément élastique(230) disposé entre le corps de clapet(210) et le bouchon(220); disposer(S200) le clapet antiretour(200) à l'intérieur du tuyau expansé(120); insérer et coupler(S300) un côté de la seconde conduite de réfrigérant(120) dans et à un côté de la conduite expansée(120) dans laquelle le clapet antiretour(200) est disposé; et fixer(S400) l'un des côtés de la seconde conduite de réfrigérant(130) et l'un des côtés de la conduite dilatée(120) par soudage.

7. Procédé de la revendication 6, dans lequel l'assemblage(S100) du clapet antiretour(200) comprend: l'accouplement de l'élément élastique(230) au corps de vanne(210); l'insertion d'une extrémité du corps de vanne(210) comportant au moins une protubérance de verrouillage(213a) dans le bouchon(220) comportant un trou de couplage et une fente de verrouillage(223); et faire tourner le bouchon(220) dans une direction de sorte que la protubérance de verrouillage(213a) s'échappe de la fente de verrouillage(223) et entre en contact avec une surface arrière du bouchon (220), de sorte que le corps de valve(210), l'élément élastique(230) et le bouchon(220) sont complètement assemblés dans une forme intégrale.
